(19) Europäisches Patentamt
European Patent Office
Office européen des brevets

(11) Veröffentlichungsnummer: **0 302 010**
**A2**

# (12) EUROPÄISCHE PATENTANMELDUNG

(21) Anmeldenummer: **88810485.8**

(22) Anmeldetag: **15.07.88**

(51) Int. Cl.4: **C 08 G 61/12**
H 01 B 1/12, C 07 D 495/04
//(C07D495/04,339:00,339:00)

(30) Priorität: **24.07.87 CH 2825/87**
**30.07.87 CH 2915/87**

(43) Veröffentlichungstag der Anmeldung:
**01.02.89 Patentblatt 89/05**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Hunziker, Max, Dr.**
**Chasseralstrasse 8**
**CH-3186 Düdingen (CH)**

(54) **Unschmelzbare, in organischen Lösungsmitteln unlösliche Polymere.**

(57) Unschmelzbare, in organischen Lösungsmitteln unlösliche Polymere, die im wesentlichen der Formel I

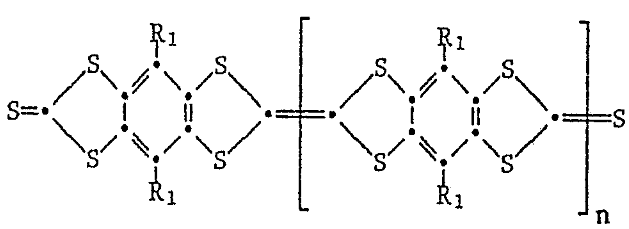

(I)

entsprechen, worin n für 2 oder eine Zahl grösser als 2 steht und jedes $R_1$ unabhängig voneinander je ein -H, $C_1$-$C_{20}$-Alkyl, $C_1$-$C_{20}$-Alkoxy, Aryl oder Aryloxy mit bis zu 12 C-Atomen, Aralkyl mit bis zu 20 C-Atomen, Alkaryl mit bis zu 20 C-Atomen, -CN, $-OCOR_2$, -OH oder $-SR_3$ steht, worin $R_2$ und $R_3$ unabhängig voneinander je ein $C_1$-$C_{20}$-Alkyl oder ein Aryl mit bis zu 12 C-Atomen bedeuten, können nach Dotierung mit Oxidationsmitteln, wie beispielsweise Jod, Brom, $SbF_5$, $AsF_5$, $PF_5$ oder $SbCl_5$, als elektrisch leitende Polymere eingesetzt werden.

EP 0 302 010 A2

## Beschreibung

### Unschmelzbare, in organischen Lösungsmitteln unlösliche Polymere

Die vorliegende Erfindung betrifft unschmelzbare, in organischen Lösungsmitteln unlösliche Polymere aus 1,3,5,7-Tetrathia-s-indacen-2,6-dithionen, ein Verfahren zu deren Herstellung und die Verwendung der Polymeren in dotierter Form als elektrisch leitende Polymere.

In Tetrahedron Letters, Nr. 26 (1977), Seite 2223 ff, wird die Herstellung von Verbindungen beschrieben, die als Ausgangsverbindungen zur Herstellung von Poly(tetrathiafulvalenen) der angegebenen Formel geeignet sein könnten. Die Durchführbarkeit der angegebenen Verfahren zur Herstellung dieser Polymeren, Umsetzung von 1,3,5,7-Tetrathia-s-indacen-2,6-dithion mit Triethylphosphit oder Umsetzung von entsprechenden Bis-dithioliumsalzen mit tertiären Aminen, wird weder bewiesen, noch werden Polymere spezifisch beschrieben.

Aus Chimia 40 (1986) Nr. 6, Seite 200 ff, geht hervor, dass die Umsetzung von 1,3,5,7-Tetrathia-s-indacen-2,6-dithion mit Triethylphosphit, die auch in der zuvor genannten Publikation angegeben wird, nur zu einem dimeren Kondensationsprodukt führt.

Im Journal für praktische Chemie, Band 320, Heft 3, 1978, Seite 404 ff, wird ferner dargelegt, dass die Umsetzung der dort genannten Phenylen- und Diphenylen-bis-dithioliumsalze mit tertiären Aminen zu einem Polymer führt, das im Vergleich zur Angabe in obengenannten Tetrahedron Letters eine andere Struktur aufweist, die in Chemistry Letters (1975), 603 ff, auch für das durch Umsetzung von Propylen- und Tetramethylen-bis-dithioliumsalzen mit tertiären Aminen erhaltenen Polymere angegeben wird.

Es wurde nun gefunden, dass man Polymere von 1,3,5,7-Tetrathia-s-indacen-2,6-dithionen in einfacherer und ökonomischerer Weise erhält, wenn man die monomere Verbindung im Temperaturbereich von 300 bis 400°C und unter Sauerstoffausschluss der Selbstkondensation unterwirft.

Gegenstand vorliegender Erfindung sind somit unschmelzbare, in organischen Lösungsmitteln unlösliche Polymere, die im wesentlichen der Formel I

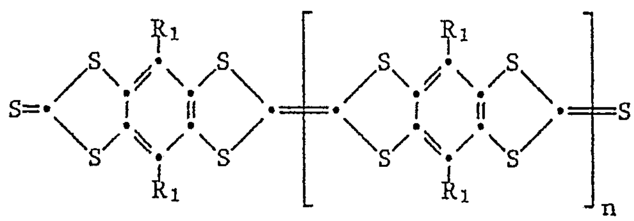

(I)

entsprechen, worin n für 2 oder eine Zahl grösser als 2 steht und jedes $R_1$ unabhängig voneinander je ein -H, $C_1$-$C_{20}$-Alkyl, $C_1$-$C_{20}$-Alkoxy, Aryl oder Aryloxy mit bis zu 12 C-Atomen, Aralkyl mit bis zu 20 C-Atomen, Alkaryl mit bis zu 20 C-atomen, -CN, -$OCOR_2$, -OH oder -$SR_3$ bedeutet, wobei $R_2$ und $R_3$ unabhängig voneinander je ein $C_1$-$C_{20}$-Alkyl oder ein Aryl mit bis zu 12 C-Atomen bedeuten.

Vorzugsweise bedeutet n in der Formel I eine Zahl grösser als 5, insbesondere grösser als 10.

Die Substituenten $R_1$ in Formel I bedeuten vorzugsweise unabhängig voneinander je ein -H, $C_1$-$C_{20}$-Alkyl, $C_1$-$C_{20}$-Alkoxy oder Aryloxy mit bis zu 12 C-Atomen.

Insbesondere bedeutet jedes $R_1$ unabhängig voneinander je ein -H, $C_1$-$C_4$-Alkyl oder $C_1$-$C_4$-Alkoxy.

Bedeuten $R_1$, $R_2$ und $R_3$ je ein Alkyl, so kann dieses geradkettig oder verzweigt sein. Geeignete Alkyle sind beispielsweise Methyl, Ethyl, Isopropyl, n-Butyl, Isopentyl, n-Heptyl, 2-Ethylhexyl, n-Decyl oder n-Dodecyl.

Wenn $R_1$, $R_2$ und $R_3$ je für ein Aryl stehen, so kann es sich beispielsweise um Phenyl, Naphthyl oder Biphenyl handeln.

Steht $R_1$ für ein Alkoxy, so kann dieses geradkettig oder verzweigt sein. Als geeignete Alkoxy seien beispielsweise genannt: Methoxy, Ethoxy, Isopropoxy, n-Butoxy, Isopentoxy oder 2-Ethylhexoxy.

Bedeutet $R_1$ ein Aryloxy, so handelt es sich vorzugsweise um Phenoxy oder Naphthoxy.

Bedeutet $R_1$ ein Aralkyl, so kann dieser Rest beispielsweise Benzyl, Phenylethyl oder Phenylpropyl sein.

Stellt $R_1$ ein Alkaryl dar, so ist dieser Rest beispielsweise ein Tolyl, Xylyl, Ethylphenyl, Propylphenyl, Cumyl, tert.-Butylphenyl, n-Butylphenyl, n-Hexylphenyl oder N-Dodecylphenyl.

Die erfindungsgemässen Polymeren der Formel I können durch thermische Selbstkondensation unter Schwefelabspaltung hergestellt werden. Dieses Verfahren ist dadurch gekennzeichnet, dass man ein 1,3,5,7-Tetrathia-s-indacen-2,6-dithion der Formel II

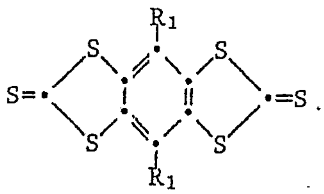 (II) ,

worin die beiden $R_1$ die gleiche Bedeutung wie in Formel I haben, unter Inertgas oder im Vakuum auf eine Temperatur zwischen 300 und 400°C erhitzt.

Vorzugsweise führt man das erfindungsgemässe Verfahren zur Herstellung von Polymeren der Formel I so durch, dass man eine Verbindung der Formel II unter Inertgas, wie beispielsweise Stickstoff oder Argon, auf eine Temperatur zwischen 350-400°C erhitzt.

Die Verbindungen der Formel II stellen im wesentlichen bekannte Verbinungen dar. Die Herstellung von 1,3,5,7-Tetrathia-s-indacen-2,6-dithion kann beispielsweise nach der in Chimia 40 (1986), Seite 200-201 angegebenen Vorschrift erfolgen. Die Verbindung der Formel II, worin beide $R_1$ je für die Hydroxylgruppe stehen, kann nach einem in den JP-Anmeldungen Kokai 77/95,695 und Kokai 77/95,694 beschriebenen Verfahren hergestellt werden. Verbindungen der Formel II, worin beide $R_1$ andere Substituenten, wie Alkyl, Alkoxy oder Aralkyl, bedeuten, können gemäss den in Tetrahedron Letters, 26 (1977), Seite 2224 ff offenbarten Vorschriften hergestellt werden.

Die erfindungsgemässen Polymere der Formel I sind teilkristalline, im allgemeinen schwarze Festkörper, die unschmelzbar sind und sich in organischen Lösungsmitteln nicht lösen. Wenn bei der Kondensationsreaktion von kristallinen Tetrathia-s-indacendithionen ausgegangen wird und die Reaktion im Festkörper durchgeführt wird, erhält man die Kristalle in veränderter Form zurück, zum Beispiel als faserige schwarze Nadeln. Gemäss IR-Spektrum ist nach der Kondensationsreaktion die C=S-Streckschwingung des Tetrathia-s-indacedithions sehr stark abgeschwächt und auf etwa 1062 $cm^{-1}$ verschoben.

Die erfindungsgemässen Polymere lassen sich durch Behandeln mit Oxidationmitteln, wie beispielsweise Chlor, Brom, Jod, Metall- oder Metalloid-pentahalogeniden, dotieren, wobei elektrisch leitfähige Polymere erhalten werden. Die Dotierung wird bei Verwendung von gasförmigen Oxidationsmitteln unter Wasser- und Luftausschluss im Vakuum bei Raumtemperatur durchgeführt.

Die Dotierung kann auch in Lösungen der betreffenden Oxidationsmittel, gelöst in einem inerten organichen Lösungsmittel, durchgeführt werden. Dazu werden die Polymeren bei Raumtemperatur 24 Stunden in der Lösung des Oxidationsmittels, suspendiert als Festkörper, gerührt, danach filtriert und mit reinem Lösungsmittel gewaschen.

Ein weiterer Erfindungsgegenstand sind somit auch Polymere der Formel I, die durch Behandeln mit Chlor, Brom, Jod, Metall- oder Metalloid-pentahologeniden oder anderen starken Oxidationsmitteln in dotierter Form vorliegen, sowie deren Verwendung als elektrisch leitende Polymere.

Vorzugsweise verwendet man als Dotierungsmittel für die Polymeren der Formel I Chlor, Brom, Jod, $PF_5$, $AsF_5$ oder $SO_3$, wobei die bevorzugt verwendbaren elektrisch leitenden Polymere erhalten werden.

Bei der Dotierung der Polymeren der Formel I verwendet man die Oxidationsmittel im allgemeinen in solchen Mengen, dass mindestens 10 Mol% der wiederkehrenden Struktureinheit im Polymer in oxidierter Form vorliegen bzw. ein von Chlor, Brom, Jod, einem Metall- oder Metalloid-pentahalogenid oder einem anderen starken Oxidationsmittel abgeleitetes Anion enthalten. Polymere der Formel I, worin mindestens 20 Mol%, insbesondere mindestens 30 Mol% der wiederkehrenden Struktureinheit in oxidierter Form vorliegen, stellen bevorzugte, dotierte Polymere dar.

Die erfindungsgemässen Polymere können in dotierter Form in der Elektronik oder Mikroelektronik Anwendung finden, beispielsweise als elektrisch leitende Füller bei der antistatischen Ausrüstung oder der elektromagnetischen Abschirmung von elektronischen Bauteilen, als Elektrodenmaterialien für Batterien, zur Herstellung von Sensoren oder Halbleiterelementen.

Herstellung von 1,3,5,7-Tetrathia-s-indacen-2,6-dithion

1 g 1,2,4,5-Tetramercaptobenzol wird unter Luftausschluss in 20 ml 1 N Natronlauge aufgeschlämmt und teilweise gelöst. Dann gibt man 8 g Schwefelkohlenstoff (im Ueberschuss) dazu und erwärmt auf Rückflusstemperatur. Unter gutem Rühren wird 2 Stunden am Rückfluss gekocht und anschliessend das als gelbes Pulver ausgefallene Produkt abfiltriert und gewaschen mit Wasser, Aethanol und Aether. Das Rohprodukt wird aus 1,2,4-Trichlorbenzol (TCB) oder Dimethylformamid umkristallisiert und fällt in langen hellgelben Nadeln an. Ausbeute: 80 % d.Th. IR-Spektrum: C=S 1048 $cm^{-1}$, UV-Spektrum $\lambda_{max}$ 391 nm, log $\varepsilon$ = 4,87; Dichte $d_{20°C}$ = 1.8797 g/$cm^3$ (aus TCB).

Herstellung von 4,8-Dimethyl-1,3,5,7-tetrathia-s-indacen-2,6-dithion (DMTTID)

Man löst 800 mg Tetramercapto-p-xylol in 20 ml mit Argon gesättigter 1 N NaOH und gibt 3,8 g

Schwefelkohlenstoff zu. Dann erwärmt man unter gutem Rühren während zwei Stunden auf 45° C. Das gelbe Produkt wird darauf abfiltriert und mit Methanol, Toluol und zuletzt Aether gewaschen. Nach Umkristallisation in 1,2,4-Trichlorbenzol (TCB) erhält man 934 mg gelbe Nadeln (86 % der Theorie).
Elementaranalyse: berechnet: C=37,71 %, H=1,90 %, S=60,39 %; gefunden: C=37,27 %, H=1,91 %, S=60,13 %. IR-Spektrum: C=S 1062 $cm^{-1}$. DSC: kein Schmelzpunkt, ab 400° C exotherme Zersetzung.

Beispiel 1: Polykondensation von 1,3,5,7-Tetrathia-s-indacen-2,6-dithion (TTID)

1 g TTID wird unter Argon oder Stickstoff als Schutzgas in ein kleines gläsernes Bombenrohr gefüllt und verschlossen. Danach wird das Bombenrohr während 2 Stunden (h) auf 350°C erhitzt (Metallbad oder Umluftofen). Nach dem Erkalten erhält man 750 mg schwarze Nadeln und als Nebenprodukt elementaren Schwefel. Das Produkt wird gut mit heissem 1,2,4-Trichlorbenzol, Alkohol und Aether gewaschen und bei 100° C getrocknet. Das Produkt ist in allen organischen Lösungsmitteln unlöslich. Der Schwefelgehalt beträgt 57,00 % entsprechend einem Polymerisationsgrad von ca. 30. Das Monomer weist einen Schwefelgehalt von 66,23 % auf. Die extrem starke IR-Absorption der C=S-Gruppen des Monomers bei 1048 $cm^{-1}$ erscheint im Polymer stark abgeschwächt bei 1062 $cm^{-1}$ (Endgruppen).

IR-Spektrum des Polymeren (KBr): 3070 w, 1508 m, 1420 m, 1320 m, 1270 m, 1145 w, 1100 m, 1062s, 850 m, 775 w, 640 w, 500 w (w = schwach, m = mittel, s = stark).

Analytische Daten und spezifische Leitfähigkeiten der mit $J_2$, $Br_2$ und $AsF_5$ dotierten Polymere sind in Tabelle 1 angegeben.

Beispiel 2:

Man geht wie in Beispiel 1 vor, führt jedoch die Reaktion während 4 h bei 350° C durch. Die analytischen Daten sowie die spezifischen Leitfähigkeiten der mit $J_2$, $Br_2$ und $AsF_5$ dotierten Polymere sind in Tabelle 1 angegeben.

Beispiel 3:

Man geht wie in Beispiel 1 vor, führt jedoch die Reaktion während 2 h bei 380° C durch. Die analytischen Daten sowie die spezifischen Leitfähigkeiten der mit $J_2$, $Br_2$ und $AsF_5$ dotierten Polymere sind in Tabelle 1 angegeben.

Oxidation des Polymers aus TTID

Die Oxidation (Dotierung) wird mit gasförmigen Oxidationsmitteln unter Wasser- und Luftausschluss im Vakuum bei Raumtemperatur (RT) durchgeführt. Nachfolgend ist beispielhaft die Dotierung eines Polymers mit $AsF_5$ beschrieben.

30-50 mg des Polymers werden in ein Wägeglas eingewogen und anschliessend in einem verschliessbaren, mit Manometer und mehreren Dosierventilen versehenen Behälter aus rostfreiem Stahl gegeben. Dann wird der Behälter mehrmals evakuiert auf $10^{-3}$ mbar und mit Reinstargon (99.9999 % rein) wieder geflutet. Am Schluss wird ein Hochvakuum erzeugt, der Vakuumanschluss verschlossen, und über ein Dosierventil $AsF_5$ in den Behälter dosiert, bis der Partialdruck 650 - 700 mbar erreicht hat. Dann lässt man den Behälter bei RT 24 h stehen, wobei eine Abnahme des $AsF_5$-Partialdrucks aufgrund der Aufnahme von $AsF_5$ durch das Polymer zu verzeichnen ist.

Ueberschüssiges $AsF_5$ wird mit einem Argonstrom ausgetrieben und danach 24 h im dynamischen Vakuum (Argonstrom) bei $5 \cdot 10^{-1}$ mbar flüchtige Reaktionsprodukte (z.B. $AsF_3$) entfernt. Der Behälter wird anschliessend in einem Handschuhkasten (glove box) mit trockener Argonatmosphäre transferiert, wo man die Probe entnimmt, sie zu einer Pille presst und im Zweikontaktverfahren ihre Leitfähigkeit bestimmt. Das Vorgehen bei Oxidation mit anderen Oxidationsmitteln ($J_2$, $Br_2$ etc.) ist analog.

Tabelle 1

| Bsp. | Reaktionstemperatur [°C] | Reaktionszeit [h] | Elementaranalyse C[%], | S[%] | spez. Leitfähigkeit $\lambda_{max}$ [$S\cdot cm^{-1}$] $J_2$, | $Br_2$ | $AsF_5$ |
|---|---|---|---|---|---|---|---|
| 1 | 350 | 2 | 41,35 | 57,00 | $6\cdot 10^{-7}$, | $3\cdot 10^{-4}$, | $2\cdot 10^{-5}$ |
| 2 | 350 | 4 | 41,62 | 56,60 | $9\cdot 10^{-8}$, | $3\cdot 10^{-4}$, | $2\cdot 10^{-5}$ |
| 3 | 380 | 2 | 42,75 | 55,22 | $1\cdot 10^{-8}$, | $7\cdot 10^{-6}$, | $1{,}5\cdot 10^{-5}$ |

Beispiele 4, 5 und 6:

Man geht analog der Arbeitsweise von Beispiel 1 vor, setzt jedoch anstelle von TTID das DMTTID ein und erhitzt auf 380-400° C. Das hellgelbe nadelige Produkt wird schwarz, ohne dass die Kristallnadeln zerfallen. Nach Dotierung mit Brom bei 20 mbar beobachtet man die folgenden Leitfähigkeiten:

| Beispiel | Reaktionstemperatur [°C] | Reaktionszeit [h] | spez. Leitfähigkeit [$S\cdot cm^{-1}$] |
|---|---|---|---|
| 4 | 380-400 | 2 | $5{,}5\cdot 10^{-5}$ |
| 5 | 380 | 2 | $2{,}3\cdot 10^{-5}$ |
| 6 | 380 | 1/2 | $1\cdot 10^{-5}$ |

Man erkennt ein Ansteigen der Leitfähigkeit bei längerer Reaktionszeit.

Anwendungsbeispiel 1

Ein durch die in Beispiel 1 durchgeführte Festkörperpolykondensation erhaltener Kristall wird mittels Platinleitpaste an beiden Enden auf einen kleinen Glasträger geklebt und mit Anschlussdrähten versehen. Der spez. Widerstand des Kristalls ist $> 10^{10}$ Ω•cm. Nun wird der Kristall in eine Atmosphäre verbracht, die einen Brom-Partialdampfdruck von $2{,}27\cdot 10^4$ Pa aufweist. Bereits nach 1 Minute ist der Widerstand auf $10^4$ Ω•cm gefallen. Nach 5 Minuten beobachtet man einen Wert von ca. $10^3$ Ω•cm. Die an verschiedenen Kristallen gemessene Maximalleitfähigkeit beträgt 4 - 6. $10^{-3}$ $S\cdot cm^{-1}$.

Anwendungsbeispiel 2

Eine schwarze Kristallnadel aus dem Beispiel 4 sind kontaktiert wie in Anwendungsbeispiel 1 beschrieben und anschliessend einem Brom-Partialdampfdruck von $2{,}2\cdot 10^4$ Pa ausgesetzt. Nach 7 Minuten wird ein maximaler Wert von $10^{-4}$ $S\cdot cm^{-1}$ für die elektrische Leitfähigkeit bestimmt.

**Patentansprüche**

1. Unschmelzbare,in organischen Lösungsmitteln unlösliche Polymere, die im wesentlichen der Formel I

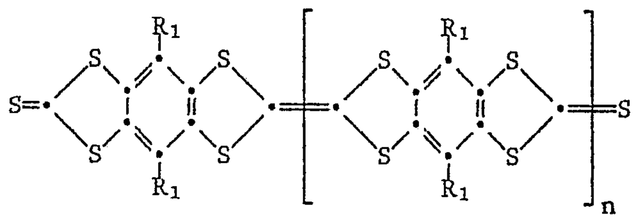

(I)

entsprechen, worin n für 2 oder eine Zahl grösser als 2 steht und jedes $R_1$ unabhängig voneinander je ein -H, $C_1$-$C_{20}$-Alkyl, $C_1$-$C_{20}$-Alkoxy, Aryl oder Aryloxy mit bis zu 12 C-Atomen, Aralkyl mit bis zu 20 C-Atomen, Alkaryl mit bis zu 20 C-Atomen, -CN, $-OCOR_2$, -OH oder $-SR_3$ steht, worin $R_2$ und $R_3$ unabhängig voneinander je ein $C_1$-$C_{20}$-Alkyl oder ein Aryl mit bis zu 12 C-Atomen bedeuten.

2. Polymere gemäss Anspruch 1, worin n in Formel I für eine Zahl grösser als 5 steht.

3. Polymere gemäss Anspruch 1, worin jedes $R_1$ unabhängig voneinander je ein -H, $C_1$-$C_{20}$-Alkyl, $C_1$-$C_{20}$-Alkoxy oder Aryloxy mit bis zu 12 C-Atomen bedeutet.

4. Polymere gemäss Anspruch 1, worin jedes $R_1$ unabhängig voneinander je ein -H, $C_1$-$C_4$-Alkyl oder $C_1$-$C_4$-Alkoxy bedeutet.

5. Polymere gemäss Anspruch 1, worin jedes $R_1$ in Formel I für ein Wasserstoffatom steht.

6. Polymere gemäss Anspruch 1, worin jedes $R_1$ in Formel I für ein Methyl steht.

7. Verfahren zur Herstellung von Polymeren der Formel I gemäss Anspruch 1, dadurch gekennzeichnet, dass man ein 1,3,5,7-Tetrathia-s-indacen-2,6-dithion der Formel II

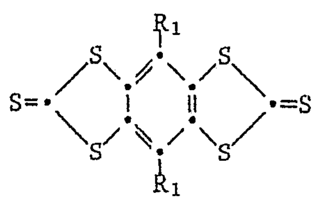

(II) ,

worin die beiden $R_1$ die gleiche Bedeutung wie in Formel I haben, unter Inertgas oder im Vakuum auf eine Temperatur zwischen 300 und 400°C erhitzt.

8. Verfahren gemäss Anspruch 7, dadurch gekennzeichnet, dass man eine Temperatur zwischen 350 und 400°C anwendet.

9. Polymere gemäss Anspruch 1, die durch Behandeln mit Chlor, Brom, Jod, Metall- oder Metalloidpentahalogeniden oder anderen starken Oxidationsmitteln in dotierter Form vorliegen.

10. Polymere gemäss Anspruch 1, die durch Behandeln mit Chlor, Brom, Jod, $PF_5$, $AsF_5$ oder $SO_3$ in dotierter Form vorliegen.

11. Verwendung der Polymeren gemäss Anspruch 1 in dotierter Form als elektrisch leitende Polymere.